# EUROPEAN PATENT SPECIFICATION

(11) **EP 0 428 526 B1**
(45) Date of publication and mention of the grant of the patent: **09.02.1994**
(21) Application number: 89906781.3
(22) Date of filing: 14.06.1989
(51) Int. Cl.: D06P 1/00, D06P 5/00, G03G 15/16, G03G 15/22, G06K 15/12

(54) **METHOD FOR XEROGRAPHIC PRINTING OF A TEXTILE MATERIAL**
VERFAHREN ZUM XEROGRAPHISCHEN DRUCKEN EINES TEXTILMATERIALS
PROCEDE D'IMPRESSION XEROGRAPHIQUE D'UN MATERIAU TEXTILE

(30) Priority: 21.06.1988 FI 882949
(43) Date of publication of application: 29.05.1991
(73) Proprietor: VALTION TEKNILLINEN TUTKIMUSKESKUS, 02150 Espoo 15 (FI)
(72) Inventor: MALMSTRÖM, Ben, SF- 33720 Tampere (FI); EPSTEIN, Mikael, SF-33720 Tampere (FI)
(74) Representative: Smulders, Theodorus A.H.J., Ir.
(86) International application number: FI8900111
(87) International publication number: WO8912552

(56) References cited:
- EP-A- 0 097 954
- WO-A-87/04393
- DE-C- 3 422 285
- GB-A- 1 273 814
- US-A- 4 027 049

## Description

The invention relates to a method for xerographic textile material.

When creating designs for printing textiles, up to now in most cases the designer or artist has created an image of the design on some support, which is suitable for creating the design, as a rule on a paper. From the paper image the different colour components are separated into separate images on some medium, such as a film using a colour separation method. From the medium, the images of different colours are transferred onto a printing plate or cylinder, e.g. of metal or plastics, for letterpress or gravure printing respectively, or on a finely meshed screen for screen printing. Almost each of these stages are carried out in a time consuming multistage manual work. The printing processes of textiles require also large series for achieving a uniform quality and a desired control.

In the domain of textiles the fast changing fashion makes great and ever increasing demands on fashion design and manufacturing of designs. This has been the reason for developing computer aided methods for creating fashion designs and for colour separation.

The computer technique has not, however, been of effective assistance to textile printing itself in order to facilitate or to speed up preparing of printing cylinders or plates, but the preparations for textile printing are still carried out largely manually. Moreover, the print processes in use require still large series.

The use of the xerographic printing method has been increased sharply in the printing of paper due to its exellent flexibility. The method makes it possible to multiplicate an image immediately without any intermediate stages. In addition, the method is energy-consuming and environmentally acceptable.

In the xerographic printing methods an image is transferred from an original object onto a light-sensitive printing surface either directly optically through a lens system or by means of a laser beam scanning the surface. In the last mentioned case the movements and the intensity of laser beam are controlled by computer according to the signal from the image.

Xerographic printing can be carried out both as a multicolour and a single colour printing. In a multicolour printing the colour separation is usually carried out in the same machine as the very printing. The multicolour printing can be carried out either using single printing cylinder, in which event all coulours are printed one after the other with the same cylinder, or using a specific cylinder for each of the colours.

Up to now xerographic printing has been mainly used for printing paper. If the printing of textiles could utilize the several advantages of xerography, it could have many economical and productional benefits.

The printing of textiles by means of a xerographic method differs from a correspinding paper printing process in some respects. E.g. the surface texture of textiles clearly differs from that of paper, and the same applies to their strength and softness properties as well as dimensional stability. For this reason various different methods for xerographic printing of textiles have been developed. The objects of the development have been direct printing on the surface of textiles, printing by means of heat transfer method, dyestuffs, as well as pretreatment of fabrics.

Canon discloses in Japanese Published Patent Application 53-30339 a method, were a fabric is printed electrostatically and the dye is thereafter fixed and steamed. Kanebo discloses in British Patent 1,503,929 a method where fabric is printed directly electrostatically. Xerox Corporation discloses in US Patent 4,064,285 a method where a colour is transferred on the surface of fabric using a flexible plate. In British Patent 1,273,814 Canon discloses a method where a fabric is printed in a multicolour process in an apparatus having one printing unit for each colour.

In Japanese Published Patent Application 52-60627 Canon discloses a method where an image is first xerographically created on a paper and it is thereafter transferred on the surface of a fabric using heat. Xerox uses a polymeric film a the medium according to British Patents 1,568,226 and 1,570,201.

In Japanese Published Patent Application 52-60296 Canon discloses a method for improving the triboelectric properies of a fabric by means of a flushable polymer and in US-Patent 4,302,201 the same enterprise discloses a method where two different dyestuffs having a particle size of 5 to 50 µm are combined. Kanebo discloses in German Patent 2,006,749 dyestuffs containing a triazine derivative as a controlling substance and the same enterprise discloses in British Patent 1,503,929 the treatment of a fabric with a treating substance for regulating the resistivity of the fabric.

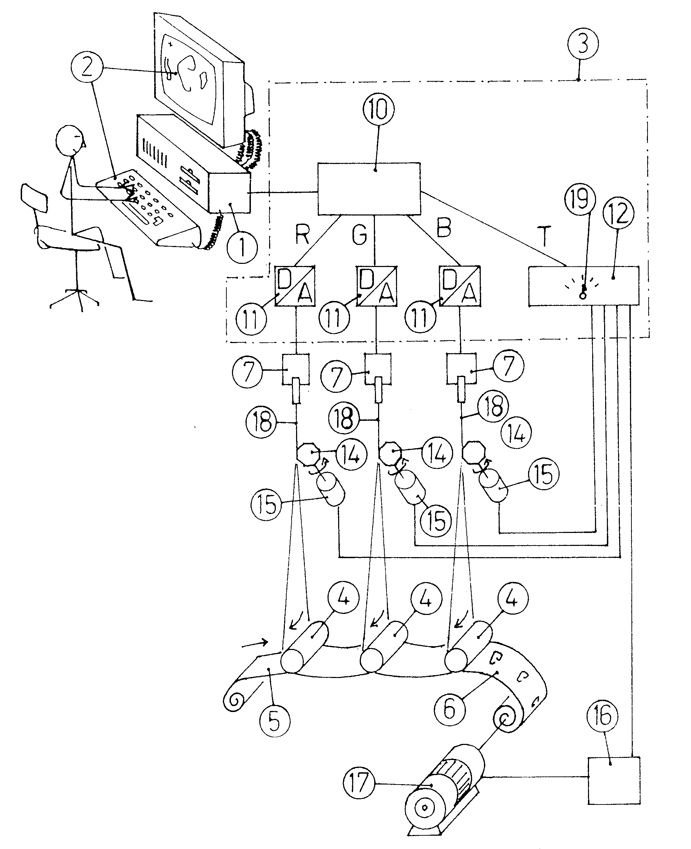

The International Publication WO-87/04393 discloses a method by which first a figure is created on the screen by means of a CAD-system, whereafter the figure is printed by means of a printer onto a heat transfer sheet. Then the transfer of the figure is effected onto the actual textile material by ironing using heat. The method uses multi-phase manual operations. The drawback of the heat transfer method is moreover the fact that after the figure has been "taken off" from the screen onto the sheet, the sheet can be used only once.

Up to now, however, there has not been available such method that would make it possible to design and print textile designs simultaneously. The aim of the invention is to provide a method, which avoids time consuming preliminary preparations for printing process and the designed pattern can be immediately printed onto a textile material.

The method of such kind is mainly characterised in that a multicolour pattern is created by means of a computer aided design system, said pattern is transferred by means of a data transmission signal directly onto a radiation-sensitive printing surface of a xerographic textile printing machine by scanning the surface with an activating beam, which is controlled by means of the data transmission signal, which is in conformity with said pattern, a colour separation being carried out to create one separate pattern for each colour and for said data transmission signal corresponding to the respective colour, and the printing is carried out using said surface onto a continuous textile material driven by a motor of the printing machine controlled by a control unit synchronizing said data transmission signals with said motor.

It is possible to transfer the pattern directly in a matrise form as a data transmission signal electrically or fibreoptically from the computer of the CAD-system, e.g. from its main memory, onto the printing surface of a xerographic textile printing machine without any separate intermediate or auxiliary patterns, in which event the radiation-sensitive printing surface of the xerographic textile printing machine is scanned with a beam activating the surface, the beam being controlled by means of a data transmission signal, which is in conformity with the pattern in the screen of the CAD-system. The colour separation for a multicolour printing of textiles can be effected using the CAD-system. This activating beam may be a laser beam, and the pattern from the CAD-system to a device controlling the laser beam can be transferred in digital form in this case.

The invention will be described in more detail in the following with references to the accompanying drawing which illustrates a method according to the invention.

It is possible to realise the printing process of textiles in such a fashion that it is possible to pass directly from the computerized image forming stage to the printing process. Hence, the stages requiring time and manual work, such as colour separation and the preparation of printing plates or cylinders (patterns) can be completely avoided. This speeds up the starting and finishing of a printing process substantially and decreases the size of the series required, thus affording considerable economical advantages and shortening the time of delivery.

The invention is carried out by controlling a xerographic textile printing device by means of a computer aided design system.

The control can be carried out using the following main principle:
- An image formed means of a computer aided design system is transferred without auxiliary or intermediate patterns in a direct data transmission into a xerographic printing machine, which itself develops and prints said image on a fabric (direct transmission method).

In a direct transmission method an image is formed in a xerographic printing device itself, and the formation is controlled by an electric or fibreoptic data transmission. As a matter of fact, a xeroprinting device can serve as a part of a design system, in which event a designer sees his design at once as finished, printed product. Xerographic printig machines operating on the basis of a laser beam can be used in a direct transmission method.

The drawing shows the main principle of the method according to the invention. A computer of a CAD-system is denoted with reference numeral 1 and auxiliary means of the CAD-system, keyboard and screen, are denoted with reference numeral 2. With the help of the CAD-system, a pattern depicting a textile design can be created on the screen 2 and it can be amended and its colours can be changed within the possibilities afforded by the system. The designed image can be also stored in a mass storage in data form, e.g. in a cassette, in a storage disk etc. The storage can be effected in digital form.

As there is the intention to print the designed image on a fabric, it is transferred to a xerographic textile printing machine, which comprises a radiation-sensitive printing surface 4 operating on electrostatic principle. The pattern for printing is formed on this surface. In the example shown by the drawing the printing surface is a rotating cylinder. A fabric 5 to be printed is guided into a direct or indirect (i.e. sufficient for printing technique) contact with the printing surface 4, whereafter the printed fabric 6 can be aftertreated, for example fixing, in known manners.

In the direct transmission method an image is transferred from the CAD-device 1, 2 in a direct data transmission electrically or fibreoptically to a xerographic textile printing machine. The signals are transmitted to a device 7 controlling an activating beam scanning a radiation-sensitive printing surface 4, the beam being preferably a laser beam, and an electrostatic pattern is formed on the printing surface 4 by means of the beam. The signals controlling the laser beam are transferred to the device 7 preferably in digital form. The transmission can take place in serial form or in parallel form.

In the multicolour printing using the direct transmission method, the data of the image in the computer aided design equipment is supplied to a xerographic printing machine in colour-separated form. The patterns resulting from the colour separation are preferably transferred in digital form, and in this event each pattern containing a determined colour is fed to its respective printing stage comprising a radiation-sensitive cylinder 4 scanned by a laser beam. In multicolour printing it is also possible to use the same radiation-sensitive cylinder, through which each colour is in turn transferred onto the fabric, in other words the fabric is guided via the cylinder so many times as is the number of colours in the printing process.

As the pattern signals are transferred directly, a device 3 controlling the xerographic printing machine is situated between the CAD-equipment 1, 2 and the xerographic printing machine. The device converts the image signals from the CAD-equipment into a form compatible with the xerographic printing machine and it gives the control commands to the printing machines.

The control device 3 comprises a control computer 10, digital-to-analog converters 11 and a control unit 12 of the printing machine. From the CAD-station 1, 2 the image is transferred in a known manner in digital form to the control computer 10 having a video memory. From the video memory a colour signal, corresponding to one colour, is transferred each through its respective line R, G or B through the D/A converter 11 in a known manner to laser guns 7, being also arranged one for each colour. Laser beams 18 are transferred by means of rotating polygonal mirrors 14 onto a light-sensitive printing cylinder 4 in a known manner, the rotating mirror 14 effecting the scanning. The mirror is driven by a motor 15. One mirror and one printing cylinder is provided for each colour. Synchronizing pluses known in video technique are transmitted through line T to the video memory/computer unit 10 from the control computer 12 of the xerographic printing unit, which computer controls the motors of the rotating mirrors and through a power transformer 16 it controls the driving motor 17 of the printing machine.

The speed of the printing machine is controlled by means of an adjusting knob 19 and the required delays in laser signals between the different colours for a proper coordination of the colours in the finished printed picture 6 are controlled through the control computer 12 of the xerographic printing machine.

Other well-known methods for transferring a data transmission signal directly to a xerographic printing machine can be used as well for printing a CAD-designed image with the aid of a xerographic method.

The invention is not exclusively restricted to the embodiment shown in the drawing, but it can be modified within the scope of the inventive idea represented by the claims. In the very printing process, some of the xerographic printing methods disclosed by the aforementioned patents and patent applications can be used, the term "xerographic" bearing in this context the meaning of a printing, which is carried out by means of an electrostatic image forming and a dyestuff. The printing inks can be in this case either dry or liquid. It is to be understood that the transmission of an image to a xerographic textile printing machine comprises also a transmission by optical fibres, the principle of this method being similar to an electric transmission.

The method can be used, when it is desirable to view during the design the appearance of a finished, printed pattern on the surface of the textile material. The invention opens also new prospects for shifting from large series to more individual designs, the printing of which can be carried out in a short time and the customer can at the same time make comparisons between different alternatives by changing the pattern, e.g. interchanging colours, using possibilities afforded by CAD-technique.

## Claims

1. Method for xerographic printing of a textile material (5), **characterised** in that a multicolour pattern is created by means of a computer aided design system (CAD), said pattern is transferred by means of a data transmission signal directly onto a radiation-sensitive printing surface (4) of a xerographic textile printing machine by scanning the surface with an activating beam, which is controlled (7) by means of the data transmission signal, which is in conformity with said pattern, a colour separation being carried out to create one separate pattern for each colour and for said data transmission signal corresponding to the respective colour, and the printing is carried out using said surface (4) onto a continuous textile material (5) driven by a motor (17) of the printing machine controlled by a control unit (12) synchronizing said data transmission signals with said motor.

2. Method as claimed in claim 1, **characterised** in that the activating beam is a laser beam.

3. Method as claimed in claims 1 or 2, **characterised** in that the pattern is transferred to the xerographic textile printing machine in digital form.

4. Method as claimed in claim 3, **characterised** in that the data transmission signal is transmitted through a video memory contained in a control computer (10) receiving sychronizing pulses from the control unit (12) of the xerographic textile printing machine.

## Patentansprüche

1. Verfahren zum xerographischen Drucken eines Textilmaterials (5), dadurch **gekennzeichnet,** dass ein mehrfarbiges Muster mittels eines Computerunterstützen Entwurfssystems (CAD) geschaffen wird, das genannte Muster mittels eines Datenübertragungssignals direkt auf eine Strahlungsempfindliche Druckfläche (4) einer xerographischen Textildruckmaschine überführt wird, indem man die Fläche mit einem aktivierenden Strahl abtastet, welcher mittels des Datenübertragungssignals gesteuert wird (7), das mit dem genannten Muster übereinstimmt, wobei Farbentrennung durchgeführt wird, um ein gesondertes Muster für jede Farbe und für das genannte, der respektiven Farbe entsprechende Datenübertragungssignal zu schaffen, und das Drucken unter Verwendung der genannten Fläche (4) auf ein kontinuierliches Textilmaterial (5) durchgeführt wird, das von einem Motor (17) der Druckmaschine angetrieben wird, welcher von einer die genannten Datenübertragungssignale mit dem genannten Motor synchronisierenden Steuereinheit (12) gesteuert wird.

2. Verfahren nach Anspruch 1, dadurch **gekennzeichnet,** dass der aktivierende Strahl ein Laser-Strahl ist.

3. Verfahren nach Anspruch 1 oder 2, dadurch **gekennzeichnet,** dass das Muster in die xerographische Textildruckmaschine in digitalischer Form überführt wird.

4. Verfahren nach Anspruch 3, dadurch **gekennzeichnet,** dass das Datenübertragungssignal durch einen Videospeicher übertragen wird, der in einem Steuercomputer (10) enthalten ist, der synchronisierende Pulsen von der Steuereinheit (12) der xerographischen Textildruckmaschine empfängt.

## Revendications

1. Procédé d'impression xérographique d'un matériau textile (5), **caractérisé** en ce qu'un modèle multicolore est créé à l'aide d'un système de conception assistée par ordinateur (CAD), ledit modèle est transféré à l'aide d'un signal de transmission de données directement sur une surface d'impression (4), sensible à la radiation, d'une machine d'impression xérographique de matériaux textiles en balayant la surface avec un faisceau activant, qui est commandé (7) à l'aide du signal de transmission de données étant en conformité avec ledit modèle, une séparation des couleurs étant effectuée pour créer un modèle séparé pour chaque couleur et pour ledit signal de transmission de données correspondant à la couleur respective, et l'impression est effectuée, en utilisant ladite surface (4), sur un matériau textile (5) continu entraîné par un moteur (17) de la machine d'impression commandé par une unité de commande (12) synchronisant lesdits signaux de transmission de données sur ledit moteur.

2. Procédé selon la revendication 1, **caractérisé** en ce que le faisceau activant est un faisceau laser.

3. Procédé selon la revendication 1 ou 2, **caractérisé** en ce que le modèle est transféré sous forme numérique à la machine d'impression xérographique de matériaux textiles.

4. Procédé selon la revendication 3, **caractérisé** en ce que le signal de transmission de données est transmis à travers d'une mémoire vidéo contenue dans un ordinateur de commande (10), qui reçoit des impulsions synchronisantes provenant de l'unité de commande (12) de la machine d'impression xérographique de matériaux textiles.
